(19) **Europäisches Patentamt European Patent Office Office européen des brevets**

(11) **EP 3 431 272 B1**

(12) **EUROPEAN PATENT SPECIFICATION**

(45) Date of publication and mention
of the grant of the patent:
**17.02.2021 Bulletin 2021/07**

(21) Application number: **17766567.6**

(22) Date of filing: **10.03.2017**

(51) Int Cl.:
**B29B 11/16** *(2006.01)* **B29C 70/10** *(2006.01)*
**B29C 70/06** *(2006.01)* **B32B 27/30** *(2006.01)*
**C08J 5/04** *(2006.01)* **C08J 5/24** *(2006.01)*
**B29C 70/54** *(2006.01)* **B29C 70/20** *(2006.01)*

(86) International application number:
**PCT/JP2017/009750**

(87) International publication number:
**WO 2017/159567 (21.09.2017 Gazette 2017/38)**

(54) **MANUFACTURING METHOD FOR FIBER-REINFORCED PLASTIC**

VERFAHREN ZUR HERSTELLUNG EINES FASERVERSTÄRKTEN KUNSTSTOFFES

PROCÉDÉ DE FABRICATION DE PLASTIQUE RENFORCÉ PAR DES FIBRES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.03.2016 JP 2016051892**

(43) Date of publication of application:
**23.01.2019 Bulletin 2019/04**

(73) Proprietor: **Toray Industries, Inc.
Tokyo 103-8666 (JP)**

(72) Inventors:
• **FUJITA, Yuzo**
  **Iyo-gun
  Ehime 791-3193 (JP)**
• **NAITO, Yuta**
  **Iyo-gun
  Ehime 791-3193 (JP)**
• **TAKETA, Ichiro**
  **Iyo-gun
  Ehime 791-3193 (JP)**

(74) Representative: **Kador & Partner PartG mbB
Corneliusstraße 15
80469 München (DE)**

(56) References cited:
**EP-A- 2 127 840** **EP-A1- 3 196 238**
**WO-A1-2007/099825** **WO-A1-2016/043156**
**JP-A- 2008 279 753** **JP-A- 2009 286 817**
**JP-A- 2010 023 449** **JP-A- 2015 147 311**
**JP-A- 2015 148 022**

**Description**

TECHNICAL FIELD

The present invention relates to a production method for a fiber reinforced plastic that has high mechanical properties.

BACKGROUND ART

Fiber reinforced plastics made up of reinforcing fiber and resin are high in specific strength and specific modulus and excellent in mechanical properties as well as having high functional properties in weather resistance, chemical resistance, etc., and accordingly have drawn attention for industrial uses as well. The uses of the fiber reinforced plastics have been expanded to uses as structural members of aircraft, spacecraft, motor vehicles, railways, ships, electric appliances, sports, etc., and demands for them are increasing year by year.

The fiber reinforced plastic used in structural members of aircrafts and the like require high mechanical properties. Such a fiber reinforced plastic is molded by forming a prepreg laminate in which continuous reinforcing fibers are impregnated with a resin into a given shape as a preform, and solidifying the preform by autoclave and the like.

PRIOR ART DOCUMENTS

PATENT DOCUMENTS

As a means to obtain the preform, a method called automated fiber placement is known, in which a wide width prepreg is cut in the fiber direction and divided to form narrow width slit tape prepregs, and then the slit tape prepregs are laminated continuously by an automated machine (For example, Patent Document 1). By arranging the narrow width slit tape prepregs which have been deformed substantially in the two dimensions, even the forming of a complicated three dimensional shape is possible.

In order to use cheap and wide width prepregs and achieve a productive forming step, a forming method called hot forming has been developed, in which a prepreg laminate which has been in advance subjected to high speed lamination into a tabular shape using an automated machine is formed into a three dimensional shape by pressing against a mold while applying heat (For example, Patent Document 2).

    Patent Document 1: WO2009/052263
    Patent Document 2 : WO96/06725
    Patent Document 3 : EP 2 127 840
    Patent Document 4 : JP 2008 279753

SUMMARY OF THE INVENTION

PROBLEMS TO BE SOLVED BY THE INVENTION

However, the technology described in Patent Document 1 caused a problem that it took time to arrange the slit tape prepregs in a desired shape, resulting in low productivity, and also a problem of high cost of material because of the additional step of forming slit tape prepregs by cutting a wide width prepreg.

In addition, with a technology disclosed in Patent Document 2, when a prepreg laminate is formed into a three dimensional shape by hot forming, there exists a problem of wrinkles because the prepreg laminate cannot conform to the three dimensional shape completely, or a problem of a reinforcing fiber-free, resin-enriched portion between the reinforcing fibers and the mold because the reinforcing fibers brace. The wrinkles and the resin-enriched portion can be a defect decreasing the surface quality and mechanical properties of the fiber reinforced plastic. Therefore, the forming into a preform without a wrinkle is important.

One problem of the present invention is, in consideration of these drawbacks seen in the background art, to provide a production method for a fiber reinforced plastic, in which a wrinkle-free preform can be formed by hot forming and the resulting fiber reinforced plastic exhibits high mechanical properties. Another problem of the present invention is to provide a fiber reinforced plastic that shows high mechanical properties in spite of its complicated shape.

MEANS FOR SOLVING THE PROBLEMS

In order to overcome such problems, the production method for a fiber reinforced plastic of the present invention

**EP 3 431 272 B1**

is defined according to the subject-matter of the independent claim 1.

In the production method for a fiber reinforced plastic of the present invention, when a population is made up of numbers of incisions contained in ten small circular regions of 10 mm in diameter arbitrarily selected in the region of an incised prepreg, the incised prepreg has a mean value for the population of 10 or greater and a coefficient of variation for the population within 20%.

In the production method for a fiber reinforced plastic of the present invention, it is requested that absolute values of angles θ formed between an orientation direction of the reinforcing fibers and the incisions be substantially the same, that the positive incisions whose θ is positive and the negative incisions whose θ is negative be approximately equal in number, and that, as an interval between a given incision and another incision that is present on an extended line of the incision and that is most proximate to the incision, intervals between the positive incisions and intervals between the negative incisions be different in length from each other.

In the production method for a fiber reinforced plastic of the present invention, it is preferable that the preform contain at least one out-of-plane deformation, and that the height of the out-of-plane deformation be 0.5 times or more and 3 times or less the mean thickness of the prepreg laminate.

In the production method for a fiber reinforced plastic of the present invention, it is preferable in the forming step that at least a partial region of the preform having an approximate shape of the mold be pressed against the mold for planarization while a shear stress is applied.

In a given resin portion P in the plane of the layer A of the fiber reinforced plastic of the present invention, when two parallel lines touching the outline of the resin portion P and having the shortest distance therebetween are drawn, the distance of the parallel lines has preferably a mean value of 0.2 mm or less.

In the fiber reinforced plastic resulting from the method of the present invention, the total volume of the resin portions P within the layer A is preferably 5% or less of the volume of the layer A.

ADVANTAGEOUS EFFECTS OF THE INVENTION

According to the present invention, a preform without a wrinkle can be formed by hot forming, and thus a fiber reinforced plastic excellent in the surface quality and mechanical properties can be produced.

BRIEF DESCRIPTION OF THE DRAWINGS

[Fig. 1] Fig. 1 is a conceptual diagram of the production method for the preform.
[Fig. 2] Fig. 2 is a conceptual diagram of a mold having protuberances and depressions on the side surface.
[Fig. 3] Fig. 3 illustrates examples of cross-sectional shapes of molds in the lengthwise direction.
[Fig. 4] Fig. 4 is a conceptual diagram of an incised prepreg.
[Fig. 5] Fig. 5 provides an example of an incision pattern in the incised prepreg.
[Fig. 6] Fig. 6 is a conceptual diagram of the out-of-plane deformation during the forming step.
[Fig. 7] Fig. 7 is a conceptual diagram of the fiber reinforced plastic resulting from the method of the present invention.
[Fig. 8] Fig. 8 is a conceptual diagram of a resin portion P.
[Fig. 9] Fig. 9 illustrates a model which was used in Examples.
[Fig. 10] Fig. 10 is a conceptual diagram of the bending and forming method.

DESCRIPTION OF PREFERRED EMBODIMENTS

In order to produce a fiber reinforced plastic which is excellent in mechanical properties and is applicable to structural members of aircrafts and the like by hot forming comprising a laminating step of laminating a plurality of prepregs that contain unidirectionally oriented reinforcing fibers and a resin to obtain a prepreg laminate, a forming step of disposing the prepreg laminate on the top surface of a mold containing the top surface and a side surface or disposing the prepreg laminate on the bottom surface of a mold containing the bottom surface and a side surface, and bending and forming the prepreg laminate along the side surface to obtain a preform having an approximate shape of the mold, and a solidifying step of disposing and solidifying the preform in a mold different than the mold used in the forming step, the present inventors have discovered after dedicated studies that the above problems can be overcome by forming the prepreg laminate with groups of prepregs containing an incised prepreg which is/are formed by providing at least a partial region with a plurality of incisions that divide the reinforcing fibers.

The production method for a fiber reinforced plastic of the present invention comprises a laminating step, a forming step, and a solidifying step. The laminating step is, when an incised prepreg is formed by providing at least a partial region in a prepreg containing unidirectionally oriented reinforcing fibers and a resin (hereinafter, referred to as

3

unidirectional prepreg in some cases) with a plurality of incisions that divide the reinforcing fibers, a step of laminating a plurality of groups of prepregs containing the incised prepreg to obtain a prepreg laminate. As explained later, the group of prepregs forming the prepreg laminate is not particularly limited as long as the group of prepregs contains an incised prepreg. The group of prepregs may be in a mode only formed by incised prepregs or a mode partially containing an incised prepreg. The prepreg laminate may have partially a different lamination number depending on the target thickness of the fiber reinforced plastic which is the subject to be molded. In the incised prepreg, the region having a plurality of incisions that divide the reinforcing fibers is referred to as an incised region hereinafter. The incised prepreg in which the incisions are inserted in advance on the entire surface of the prepreg and thus which has the incised region on the entire surface is preferable because it is easy to produce and highly versatile. In the incised region, all the reinforcing fibers may be divided by incisions or fibers not divided by an incision may be contained. When a complicated form with many protuberances and depressions is formed, it is preferable that all the reinforcing fibers be divided by incisions in the incised region.

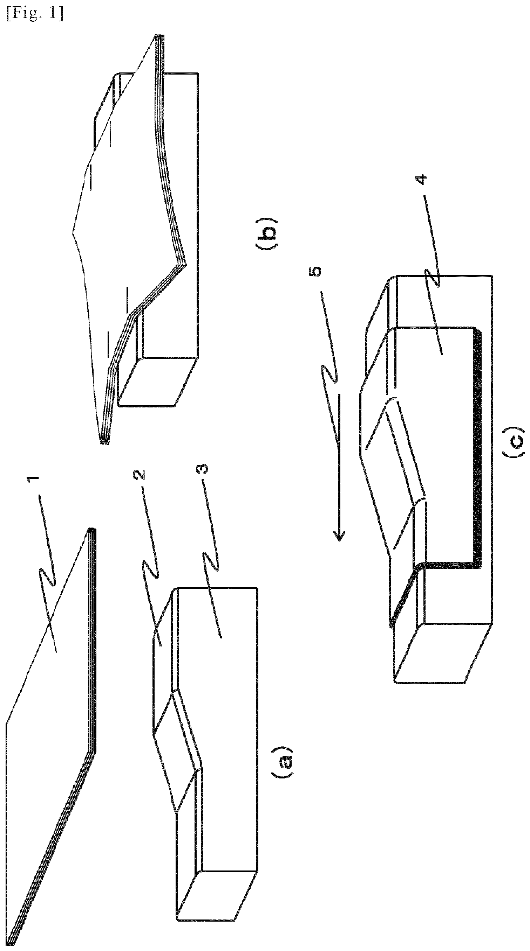

Fig. 1 shows a conceptual diagram of the forming step by hot forming, in which the prepreg laminate 1 is pressed against and disposed on the top surface 2 of the mold, and then bended and formed along the side surface 3 to form a preform 4 having an approximate shape of the mold. When the mold of Fig. 1 is used upside down, the top surface 2 becomes the bottom surface. In the forming step, the substrate may be disposed under the bottom surface and bended to the side surface and thus formed. The mold may other surfaces as long as the mold contains a top surface and a side surface. The preform having an approximate shape of the mold is a prepreg laminate which has been bended and formed into a shape containing a top surface and a side surface or a bottom surface and a side surface. Before being detached from the mold, the preform having an approximate shape of the mold may be in contact with the mold, or a portion which is detached from the mold may be also present. When a portion which is detached from the mold is present before the preform having an approximate shape of the mold is detached from the mold, the preform having an approximate shape of the mold refers to the condition in which, for 80% or more of the surface of the prepreg laminate on the mold side, the distance to the surface of the mold is 3 times or less the mean thickness of the prepreg laminate.

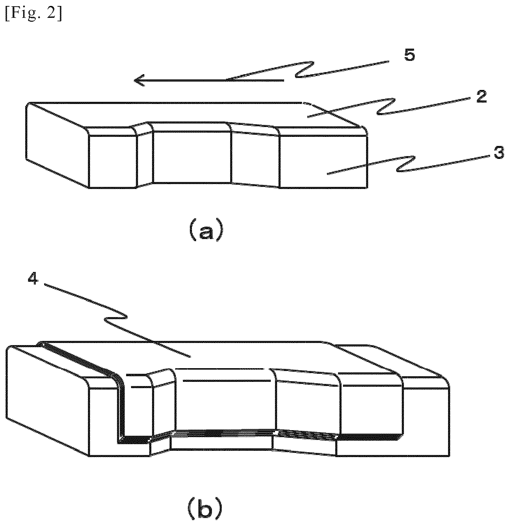

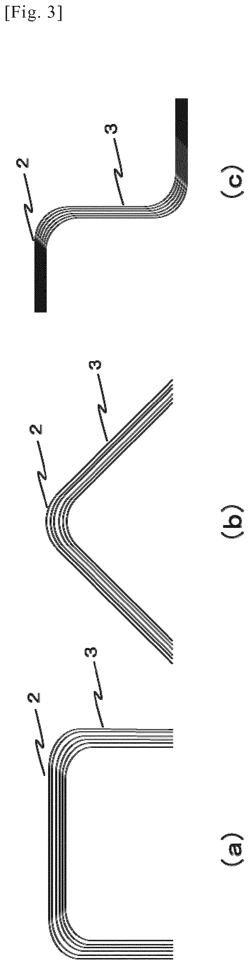

The mold used in the forming step is not particularly limited as long as it has a top surface and a side surface. In other words, the mold against which the prepreg laminate is pressed may have a protuberance and a depression on the top surface as shown in Fig. 1, or may have a protuberance and a depression on the side surface as shown in Fig. 2. The protuberances and depressions may be present on both of the top surface and the side surface, and the lengthwise direction 5 of the mold may show a curved line. The forming may be performed by using a mold in which a cross section containing the curved surface portion of the preform, for example, any of the cross sections in a C shape as shown in Fig. 3 (a), in an L shape as shown in Fig. 3 (b) and a Z shape as shown in Fig. 3 (c), stretches in the lengthwise direction 5 of the mold. As for the mold in a C shape as shown in Fig. 3 (a), the side surface may not be perpendicular to the top surface. For the forming into an L shape of Fig. 3 (b), the top surface may be one surface while the side surface may be the other side. Alternatively, the top surface may be the ridge portion where two sides join while the two sides may be the side surfaces. As in the Z shape of Fig. 3 (c), the mold may contain a surface different than the top surface and the side surface. Instead of having the side surfaces on both sides with respect to the top surface as in a C shape or an L shape, the mold may contain the side surface only present on one side with respect to the top surface.

In the forming step, the preform having an approximate shape of the mold is formed by bending and forming a heated prepreg laminate along the side surface. In the forming step, it is preferable that the prepreg laminate be heated by performing the bending and forming inside a chamber having a heat source or near a heater. Generally, when the prepreg laminate is bended and formed, the prepreg laminate has to be subjected to the in-plane deformation in response to the protuberances and depressions of the mold by the sliding between the prepreg layers because a perimeter difference between the inner perimeter and outer perimeter occurs. Since the unidirectional prepreg having no incision does not deform in the orientation direction of the reinforcing fibers (hereinafter, simply referred to fiber direction in some cases), the unidirectional prepreg cannot conform to the shape in some cases even when subjected to the in-plane deformation along with the sliding between the layers. On the other hand, the incised prepreg can be subjected to the in-plane deformation along with the elongation in the fiber direction, and thus, the shape conformity is improved compared to the unidirectional prepreg. Therefore, the use of groups of prepregs containing an incised prepreg as the prepreg laminate allows for the elongation even in the fiber direction and improves the shape conformity to a shape with protuberances and depressions at the time of the bending and forming. The group of prepregs forming the prepreg laminate is not particularly limited as long as the group of prepregs contains an incised prepreg. In the group of prepregs forming the prepreg laminate, all the prepregs may be incised prepregs, or incisions may be inserted only in a prepreg where the elongation in the fiber direction is necessary.

In the forming step, as a method for bending and forming, the prepreg laminate may be pressed against the mold by decompression in a sealed space, or a presser for pressing the prepreg laminate against the mold can be used for forming. Alternatively, the forming is performed manually.

In the solidifying step after the preform having an approximate shape of the mold is produced, in order to prevent a defect such as the lack of resin or the like on the surface of the fiber reinforced plastic and improve the appearance quality, the preform is preferably disposed and solidified in a mold different than the mold used in the forming step. Even when the out-of-plane deformation is contained in the preform having an approximate shape of the mold, at the time of solidification, the out-of-plane deformation is absorbed inside the plane, and a fiber reinforced plastic without any out-of-plane deformation can be obtained. The mold used in the solidifying step may be a shape that envisages the shape of the outer perimeter of the preform, or a shape of the outer perimeter which is modified in consideration of the thermal contraction or the flow of the resin. A mode is also included in which a female mold is overlaid on the mold used for the preform while the preform remains disposed therein. As a solidifying method, in the case of a thermosetting resin, the curing is preferably performed by using an autoclave in order to prevent a defect such as a void, but the solidification may be also performed by controlling the heating temperature, using a vacuum in combination.

In the incised prepreg used for the present invention, the incisions are preferably distributed at a high density and in a uniform way. Specifically, when an incised prepreg is formed by providing at least a partial region of a prepreg with a plurality of incisions that divide the reinforcing fibers and when a population is made up of the numbers of incisions contained in ten small circular regions of 10 mm in diameter arbitrarily selected from the incised region of the incised prepreg, it is preferable that a mean value for the population be 10 or greater and a coefficient of variation therefor be within 20% (hereinafter, a state in which the mean value in a population is 10 or greater will be referred to as being highly dense, and a state in which a coefficient of variation is within 20% will be referred to as being homogeneous). Even when the same number of reinforcing fibers as in the incision distribution of a low density are divided by incision, a highly dense incision distribution can make each incision smaller, thereby minimizing the opening of each incision when the incised prepreg is elongated. As a result, the mechanical properties of the fiber reinforced plastic at the time of the solidification do not deteriorate, and furthermore, the surface quality improves. The uniform distribution of the incisions can also prevent an unbalanced and local elongation in the incised prepreg, and has the effect of ameliorating the mechanical properties and the surface quality. The reinforcing fiber length divided by incisions is preferably 10 mm or more from the viewpoint of the mechanical properties. The reinforcing fiber length divided by incisions is more preferably 15 mm or greater and further preferably 20 mm or greater. The insertion of finer incisions at a high density can provide a long incised prepreg with the reinforcing fiber length of 15 mm or more. Thus, the conformity to a three dimensional shape and a good surface quality can be maintained while a synergistic effect of preventing the decrease of mechanical properties due to the small size of each incision and improving the mechanical properties due to the long reinforcing fibers can be expected.

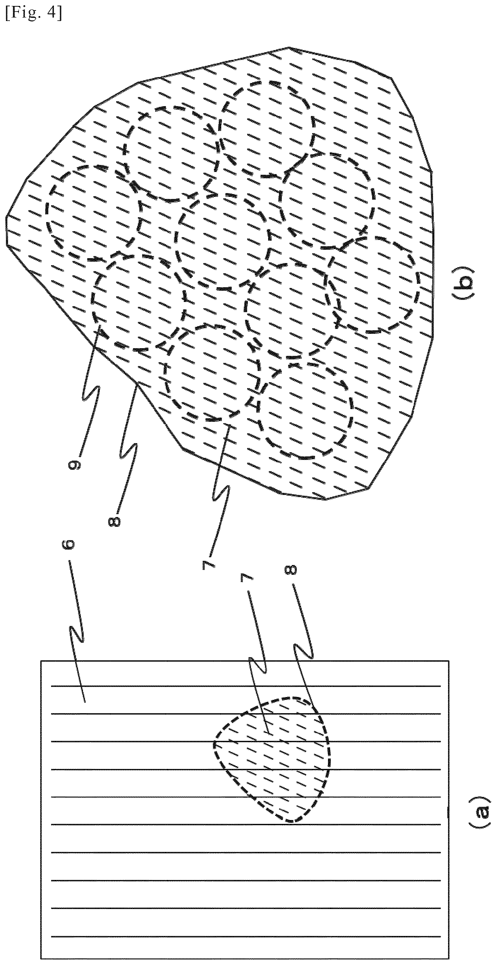

Fig. 4 (a) illustrates a conceptual diagram of an incised prepreg 6 that includes an incised region 8 in which a prepreg is provided with a plurality of incisions 7. Fig. 4 (b) illustrates a state in which ten circular small regions 9 of 10 mm in diameter have been extracted in an incised region 8. Although it is preferable that small regions be extracted within an incised region densely to such a degree that the small regions do not overlap with each other, it is permissible to extract small regions so that small regions overlap in the case where the incised region is not sufficient in size to extract ten small regions without any one of them overlapping another. However, in order to determine the mean value for the population and the coefficient of variation therefor mentioned above with better accuracy, it is impermissible to set a small region beyond the boundary of an incised region. The boundary of the incised region is a group of line segments that is formed by linking line segments that interconnect end portions of incisions so that the group of line segments embraces therein all the incisions, and the total length of the group of line segments is minimized.

The number of incisions contained in the small region is the total number of incisions present in the small region and incisions that are partially in contact with the outline of the small region. Incidentally, the foregoing mean value for the population and the foregoing coefficient of variation for the population are calculated by expression 1 and expression 2, respectively, where the number of incisions in the ten small regions is $n^i$ ($i$ = 1 to 10).

[Math. 1]

$$\text{Average} = \frac{1}{10}\sum_{i=1}^{10} n_i \qquad \cdots \text{Mathematical Formula 1}$$

[Math. 2]

$$\text{Variation Coefficient} = \frac{1}{\text{Average}} \sqrt{\frac{1}{10} \sum_{i=1}^{10} (n_i - \text{Average})^2}$$

・・・Mathematical Formula 2

Methods of inserting incisions at a high density include a method in which the projected length Ws is made smaller than 1 mm, wherein the Ws is a length projected to a plane perpendicular to the orientation direction of the reinforcing fibers. In the forming step or the solidifying step, fibers can be flowed into the opened incisions at the same time with the elongation to make the opened incisions less obvious. A smaller Ws is preferable because this effect can be exhibited significantly.

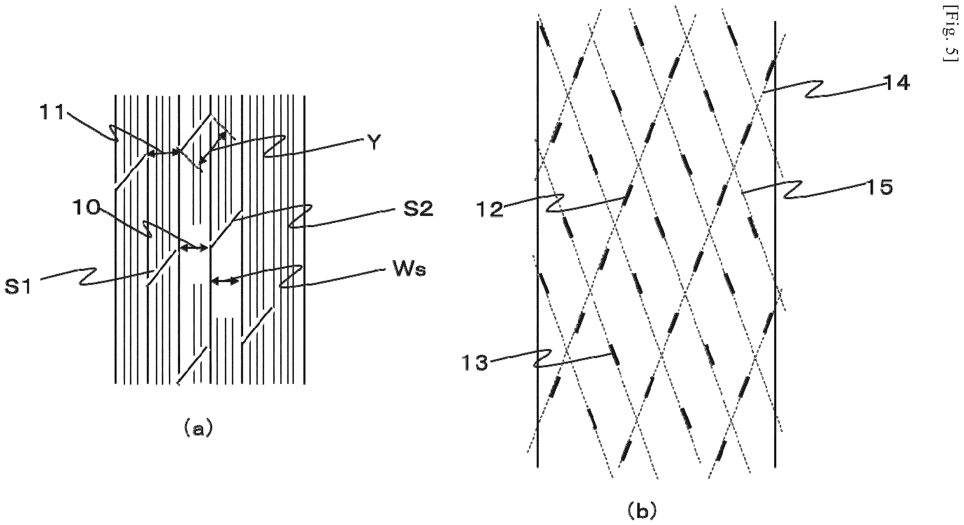

As for the incision pattern, in addition to reducing the Ws, it is also preferable that, as shown in Fig. 5 (a), the given proximate incision S1 and its most proximate incision S2 do not divide the same reinforcing fibers. The reinforcing fibers divided by most proximate incisions are relatively short reinforcing fibers and therefore become a factor that reduces the mechanical properties when the incised prepreg is formed as a fiber reinforced plastic. Besides, when between the incision S1 and its most proximate incision S2 there exists reinforcing fibers that are not divided by either the incision S1 or the incision S2, the incised prepreg, when formed as a fiber reinforced plastic, is less likely to have the incision S1 and the incision S2 interconnected due to damage and therefore achieves improved mechanical properties.

The reinforcing fibers between the incision S1 and the incision S2 may be divided by an incision that is not most proximate to the incision S1 or the incision S2. Alternatively, it is permissible that reinforcing fibers between the incision S1 and the incision S2 not be divided by any incision. The width 10 of the band between the incisions most proximate to each other is, in a direction perpendicular to the reinforcing fibers, preferably at least 0.5 times a projected length Ws of the incisions projected on a plane perpendicular to the reinforcing fibers and, more preferably, at least 1 time as long as Ws.

In an incised prepreg in which incisions are highly densely distributed, if the distances between incisions are short so that incisions most proximate to each other divide the same reinforcing fiber, there is possibility of very short fibers being contained. Therefore, by providing most proximate incisions with such intervals that the most proximate incisions do not divide the same reinforcing fiber, even a highly dense incision pattern can be inhibited from having short reinforcing fibers contained and can be allowed to develop stable mechanical properties.

As a more preferred incision pattern, an incised prepreg in which the incisions have substantially the same length Y (hereinafter, Y will be referred to also as incision length) and the distance between incisions most proximate to each other is longer than 0.5 time Y can be cited. Note that substantially the same length refers to all the incision lengths being within $\pm 5\%$ from the mean value of all the incision lengths (which will apply hereinafter in the same manner). Incidentally, in the present invention, the incisions may be linear or curved and, in either case, the line segment connecting end portions of incisions represents an incision length Y.

The distance between incisions most proximate to each other means the shortest distance between the incisions most proximate to each other. In the case where the distance between incisions most proximate to each other is short, damage formed in a fiber reinforced plastic will likely interconnect incisions; therefore, it is preferable that the distance between incisions most proximate to each other be greater than 0.5 time the incision length Y. The distance between incisions most proximate to each other is more preferably at least 0.8 time Y and, further preferably, at least 1.2 time Y. On the other hand, the distance between incisions most proximate to each other do not have a particular upper limit. However, in providing a prepreg with highly dense incisions, it is not easy to make the distance between incisions most proximate to each other at least 10 times the incision length Y.

As for an incised prepreg that has incisions distributed highly densely, the conformity to a three dimensional shape will improve and small sizes of the individual incisions will make it possible to expect improvements in mechanical properties. The improvements in mechanical properties will be greater in the case where the incisions are remote from each other than in the case where the incisions are closer to each other in distance. Therefore, in the case where incisions are densely provided, an incision pattern in which the incisions are spaced in distance from each other is particularly important, more specifically, it is particularly important that the distance between incisions most proximate to each other be longer than 0.5 time the incision length Y, in order to improve mechanical properties. Furthermore, in the case as shown in Fig. 5 (a) of an incised prepreg in which all the reinforcing fibers are divided within an incised region so as to improve the formability, the distance 11 between incisions most proximate to each other being longer than 0.5 time the incision length Y and the incisions most proximate to each other not dividing the same reinforcing fiber will develop as best mechanical properties as possible without impairing the conformity to a three dimensional shape or the surface quality.

As a further preferred incision pattern, an incised prepreg in which incisions are provided obliquely to the orientation direction of reinforcing fibers can be cited. In the case where incisions are curved, it is indicated that line segments interconnecting end portions of the incisions are oblique to the orientation direction of reinforcing fibers. Having the incisions oblique to the orientation direction of reinforcing fibers will improve the conformity of the incised prepreg to a three dimensional shape and the mechanical properties of a fiber reinforced plastic formed from the incised prepreg. Where the angle between incisions and the orientation direction of reinforcing fibers is θ, it is preferable that θ be 2 to 60°. In particular, the absolute value of θ being 25° or less conspicuously improves mechanical properties and, particularly, the tensile strength. From this viewpoint, it is preferable that the absolute value of θ be 25° or less. In the forming step, along with the elongation of the incised prepreg, θ may become smaller. A smaller θ results in a good surface quality because the opened incisions at the time of the elongation of the incised prepreg will be reduced. Moreover, the mechanical properties of the fiber reinforced plastic after the preform is solidified will ameliorate. It is preferable that the absolute value of θ be 2° or greater. In this preferred range, reinforcing fibers are not likely to escape from a blade when the blade is used to provide incisions and therefore it is possible to provide incisions while securing a positional accuracy of incisions. Incidentally, the incisions may be linear or curved. In the case where incisions are curved, it is indicated that the angle formed between a line segment interconnecting end portions of the incisions and the orientation direction of the reinforcing fibers is θ.

Not only in the case where incisions are highly densely distributed but also in the case where the smaller the absolute value of θ, the more improvement in mechanical properties can be expected and where, in particular, all the reinforcing fibers in the incised region are divided, there is a concern that incisions are near to each other and damages that occur in incisions are likely to join together, so that there is a concern that mechanical properties may deteriorate. However, it is preferable that a given incision and another incision most proximate to that incision do not divide the same reinforcing fiber and that the incisions have substantially the same length of Y and the distance between incisions most proximate to each other be controlled to be longer than 0.5 time Y because further improvements in mechanical properties can be expected in comparison with the case where incisions are perpendicular to the orientation direction of reinforcing fibers. This is preferable in particular in the case where incisions are highly dense because improvements in mechanical properties and improvements in surface quality due to the restrained opening of the incisions can be expected.

As a preferred mode of the incised prepreg of the present invention, an incised prepreg in which the absolute values of the angles θ formed between incisions and the orientation direction of reinforcing fibers are substantially the same and the positive incisions whose θ is positive and the negative incisions whose θ is negative are approximately equal in number can be cited. The absolute values of θ being substantially the same means that the angles θ in all the incisions are within the range of ±1° from the mean value of the angles θ of all the incisions. The positive incisions and negative incisions being approximately equal in number means that the number of incisions whose θ is positive and the number of incisions whose θ is negative are approximately equal. Further, the number of incisions whose θ are positive and the number of incisions whose θ is negative being approximately equal is assumed to mean that when expressed in percentage based on number, both the number of angles θ that are positive and the number of angles θ that are negative are greater than or equal to 45% and less than or equal to 55% (the same will apply hereinafter). Providing not only the positive incisions within the incised prepreg but also negative incisions therein makes it possible to macroscopically restrain shearing deformation in plane and stretch the incised prepreg due to shearing deformation occurring in the opposite direction in the vicinity of negative incisions in the case where when the incised prepreg is stretched, inplane shearing deformation occurs in the vicinity of positive incisions.

By disposing positive incisions 12 and negative incisions 13 alternately with each other as in Fig. 5 (b), a distance between proximate incisions can be easily secured while incisions are highly densely provided. An incision pattern in which the absolute values of the angles θ between the incisions and the orientation direction of the reinforcing fibers are substantially the same and the positive incisions and the negative incisions are approximately equal in number will enable lamination in substantially the same manner as common continuous fiber prepregs. Unlike in the case of an incised prepreg containing positive incisions alone or negative incisions alone, the additional effort to control the procedure of lamination can be prevented.

The incised prepreg is further preferably an incised prepreg in which positive incisions and negative incisions are approximately equal in number, and as for the interval between a given incision and another incision that is present on an extended line of that incision and that is most proximate to that incision, the intervals between positive incisions and the intervals between negative incisions are different in length from each other. In Fig. 5 (b), the positive incisions 12 are disposed on straight lines 14 and negative incisions 13 are disposed on straight lines 15 and the intervals between the positive incisions on the straight lines 14 are smaller than the intervals between the negative incisions on the straight lines 15. This arrangement of incisions allows securement of a distance between proximate incisions with homogeneity and high density and makes it possible to create an incision pattern in which incisions most proximate to each other do not divide the same reinforcing fiber. Furthermore, with regard to the interval between a given incision and another incision that is present on an extended line of that incision and that is most proximate to that incision, this arrangement of incisions makes it possible to have the length of reinforcing fibers longer than an arrangement in which the intervals between positive incisions and the intervals between negative incisions are the same in length and makes it possible to maintain mechanical properties even when incisions are distributed highly densely. Incidentally, an incision being present on an extended line of an incision means that the angle between a straight line extending from an incision and a straight line connecting most proximate points on the incisions concerned is within 1°.

With regard to the interval between a given incision and another incision that is present on an extended line of that incision and that is most proximate to that incision, when an incision pattern in which the intervals between positive incisions and the intervals between negative incisions are different in length is adopted, the reinforcing fiber length can be made longer despite high density and, furthermore, in the case where all the reinforcing fibers within the incised region are divided, too, a given incision and another incision most proximate to that incision do not divide the same reinforcing fiber, and it becomes easier to obtain an incision pattern in which the distance between incisions most proximate to each other is longer than 0.5 time the incision length Y. This makes it possible to more effectively improve mechanical properties without impairing the surface quality and the conformity to a three dimensional shape. Considering the above, an incision pattern in which positive incisions and negative incisions are provided in approximately equal numbers, and in which, as for the interval between a given incision and another incision that is present on an extended line of that incision and that is most proximate to that incision, the intervals between the positive incisions and the intervals between the negative incisions are different in length, and in which a given incision and another incision most proximate to that incision do not divide the same reinforcing fiber, and in which the distance between incisions most proximate to each other is longer than 0.5 time the incision length Y, and in which substantially all the reinforcing fibers in the incised region are divided into fiber lengths of 15 mm or greater is particularly preferable from the viewpoint of the conformity to a three dimensional shape, the surface quality, and the mechanical properties.

In the present invention, the resin contained in the prepreg and the incised prepreg may be a thermoplastic resin or a thermosetting resin. As the thermoplastic resin, for example, polyamide (PA), polyacetal, polyacrylate, polysulphone, ABS, polyester, acryl, polybutylene terephthalate (PBT), polycarbonate (PC), polyethylene terephthalate (PET), polyethylene, polypropylene, polyphenylene sulfide (PPS), polyether ether ketone (PEEK), polyether imide (PEI), polyether ketone (PEKK), liquid crystal polymer, polyvinyl chloride, fluorine-based resins, such as polytetrafluoroethylene, silicone, etc., can be cited. As for the thermosetting resin, it suffices that the thermosetting resin undergoes crosslink reaction due to heat to form at least a partial three-dimensional crosslink structure. As such thermosetting resins, unsaturated polyester resin, vinyl ester resin, epoxy resin, benzoxazine resin, phenol resin, urea resin, melamine resin, polyimide resin, etc., can be cited. Resins obtained by modifying these resins or blending two or more species thereof can also be used. Furthermore, these thermosetting resins may be resins that self-cure by heat or may also be resins that contain a curing agent, a cure accelerating agent, etc.

The reinforcing fiber contained in the prepreg and the incised prepreg of the present invention may be glass fiber, Kevlar fiber, carbon fiber, graphite fiber, boron fiber, etc. Among these, carbon fiber is preferable, from the viewpoint of specific strength and specific elastic modulus.

When the volume fraction Vf of the reinforcing fibers in the prepreg laminate is 70% or less, the shifting of reinforcing fibers occurs at incised portions so that the bridging is effectively inhibited. Thus, shape conformity and an effect of inhibiting molding deficiency, such as void, can be obtained. From this viewpoint, it is preferable that Vf be 70% or less. Furthermore, as Vf is lower, the bridging can be more inhibited. However, if Vf is less than 40%, high mechanical properties required for structural materials are less likely to be obtained. From this viewpoint, it is more preferable that Vf be 40% or greater. A more preferable range of Vf is 45 to 65% and, further preferably, 50 to 60%.

The prepreg and the incised prepreg may be produced by using a prepreg whose reinforcing fibers have been partially impregnated with resin (i.e., have been partly left unimpregnated). When an incised prepreg whose reinforcing fibers have been partially impregnated with resin is used, the unimpregnated portions of the reinforcing fibers within the prepreg become in-plane flow paths so that the air confined between layers of incised prepregs at the time of lamination thereof and gases such as volatile components from the incised prepregs are easily discharged to the outside of the incised prepregs (such flow paths of gases as these are called deaeration path). The rate of impregnation is preferably 10 to 90%. This preferable range allows an excellent operation property. For example, the delamination is unlikely to occur between reinforcing fibers and the resin, and the incised prepreg does not break into two parts at an unimpregnated portion at the time of lamination of incised prepregs. Moreover, the voids are unlikely to remain even when the impregnation time during the molding is not long. From this viewpoint, a more preferable upper limit of the range of the impregnation ratio is 70%, and a further preferable upper limit is 50%, and a more preferable lower limit of the range of the impregnation ratio is 20%.

In the prepreg and the incised prepreg of the present invention, a resin layer may be present in a surface thereof. As a resin layer is present in a surface of the incised prepreg, an inter-layer resin layer is molded between incised prepregs when the incised prepregs are laminated. Therefore, when an out-of-plane impact load acts, crack is induced in a soft inter-layer resin layer and the presence of the thermoplastic resin achieves high toughness, inhibiting the delamination, so that the residual compressive strength subsequent to the out-of-plane impact can be increased. Thus, this incised prepreg is suitable as materials of main structures with high safety requirements for aircrafts and the like.

In a preferred mode of the present invention, as an example, the preform contains at least one out-of-plane deformation, and the height of the out-of-plane deformation is 0.5 times or more and 3 times or less the mean thickness of the prepreg laminate.

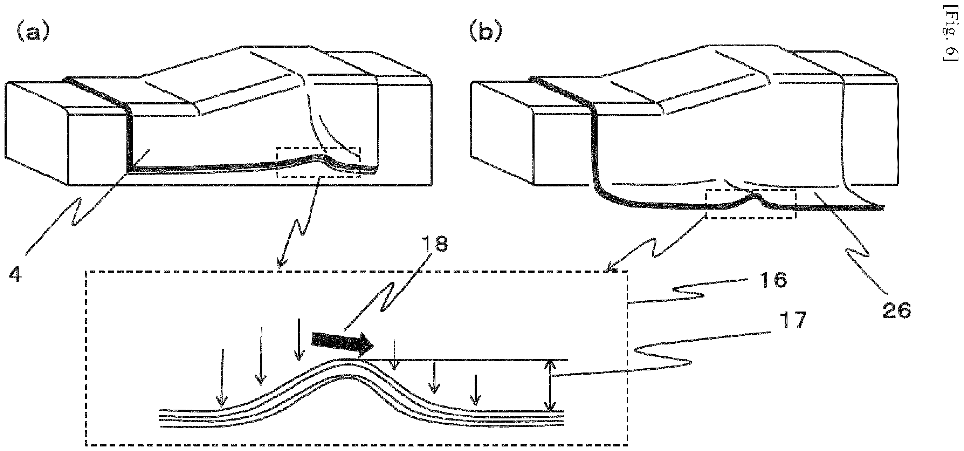

For the mean thickness of the prepreg laminate, the prepreg laminate in the tabular shape before the forming is measured for the thickness using a ratchet micrometer with a flat distal end at a measurement pressure of 5N, and the mean value of the thickness measured at three sites in the end portion of the prepreg laminate is determined. The out-of-plane deformation of the preform indicates, when the end surface 16 of the preform is viewed after the bending and forming as shown in Fig. 6, the maximal value of the height difference 17 at a site with a difference in level like between a protruding portion and a flat portion of the end surface. When a depressed portion is present in addition to the protruding portion and the flat portion, the out-of-plane deformation of the preform refers to the difference in height either between the depressed portion and the planar surface portion or between the depressed portion and the protruding portion (also referred to as wrinkle). In other words, the out-of-plane deformation of the prepreg laminate during the forming step means the maximal value of the height difference in the end portion of the prepreg laminate during the forming.

In the case of a unidirectional prepreg without an incision, the out-of-plane deformation cannot be absorbed inside the plane. As a result, when the out-of-plane deformation is observed in the preform, a fiber reinforced plastic having a poor appearance quality is obtained upon the solidification. In the present invention, even when it is difficult to keep the out-of-plane deformation 0.5 times or less the mean thickness of the prepreg laminate, the out-of-plane deformation can be absorbed inside the plane during the solidifying step. Therefore, even with the presence of the out-of-plane deformation in the preform, a fiber reinforced plastic with a good appearance quality can be obtained. This is an effective method at a site to which a high pressure can be applied upon the solidification, such as, in particular, the flange 26 shown in Fig. 6. However, when the out-of-plane deformation is too large, it cannot be absorbed inside the plane. Therefore, the height of the out-of-plane deformation is preferably 3 times or less the mean thickness of the prepreg. By tolerating the residual out-of-plane deformation in the preform, the effort to remove the out-of-plane deformation in the preform can be reduced, resulting in a better productivity of the fiber reinforced plastic.

In the forming step, it is preferable that the bending and forming be performed such a way that the out-of-plane deformation of the prepreg laminate is always 3 times or less the mean thickness of the prepreg laminate. The out-of-plane deformation of the prepreg laminate is further preferably 1 times or less. As a specific method of controlling the out-of-plane deformation of the prepreg laminate, a device provided with several pressers which compress the prepreg laminate against the mold in the out-of-plane direction may be used to perform the forming while controlling the pressers by the detection of the out-of-plane deformation with a sensor or the like. The bending and forming may also be performed by checking the change in thickness visually and pressing manually the site showing a large out-of-plane deformation. The site or the timing for pressing the prepreg laminate may be determined by running a preparatory bending and forming test or a simulation so that the out-of-plane deformation is maintained 3 times or less the mean thickness of the prepreg laminate during the forming step.

In a further preferred mode of the present invention, it is preferable in the forming step that at least a partial region of the preform having an approximate shape of the mold be pressed against the mold for planarization while a shear stress is applied. In the present invention, as described above, a fiber reinforced plastic with a good appearance quality can be obtained even when the out-of-plane deformation is present in the preform. Nonetheless, when the out-of-plane deformation is present on the side surface where it is difficult to apply pressure upon the installation of the preform in a female mold during the solidifying step, the out-of-plane deformation in the preform may be planarized in advance. In the case of a prepreg laminate only formed by groups of prepregs having no incision, the prepreg laminate does not elongate in the fiber direction. Thus, the out-of-plane deformation on the preform cannot be removed, and the protuberances and depressions remain. On the other hand, with the incised prepreg, by pressing the preform against the mold and applying a shear stress in the out-of-plane direction, the out-of-plane deformation can be absorbed inside the plane, resulting in the planarization.

Fig. 6 illustrates a conceptual diagram in which the preform 4 having the out-of-plane deformation is pressed against the mold while the shear stress 18 is applied. The shearing deformation is preferably carried out in the direction that stretches the out-of-plane deformation. Specific examples of the method of applying the shear stress include pressing the mold with a roller or the like, rubbing by hand to planarize the out-of-plane deformation manually, etc. The step of carrying out this planarization is preferably carried out in a temperature range in which the prepreg laminate softens as the in-plane prepreg laminate easily deforms. In the forming step, it is preferable that the out-of-plane deformation of the prepreg laminate be 3 times or less the mean thickness of the prepreg laminate because the out-of-plane deformation can be more easily planarized by shear stress. When the preform having an approximate shape of the mold is pressed against the mold with the shear stress applied and thus planarized, it is possible to press against the mold for the planarization while applying the shear stress to the entire preform. However, the planarization by pressing against the mold while applying the shear stress only to a certain site having a large protuberance and depression is sufficient.

As described above, the present invention describes the case where the out-of-plane deformation in the preform is tolerated and solidified and the case where the solidification is performed after the planarization. The choice of the method is determined as follows: the out-of-plane deformation can be tolerated when a large pressure, for example, a pressure of 3 MPa or more, can be applied, in the solidifying step, to the site where the out-of-plane deformation occurs while the out-of-plane deformation is preferably made flat when a large pressure cannot be applied.

The present disclosure also provides a fiber reinforced plastic which is preferably applicable to stringers of aircrafts and the like, which has excellent mechanical properties, and which contains a curved surface. That is, provided is a fiber reinforced plastic comprising a resin and a reinforcing fiber and having a planar surface portion and a curved surface portion, wherein reinforcing fibers which are divided in at least a partial region are unidirectionally oriented, and resin portions P are present between fiber bundles adjacent to each other in the orientation direction of the reinforcing fibers, and a layer A having the resin portions P in a way that a line segment interconnecting the end portions of the resin portions P is disposed obliquely to the orientation direction of the reinforcing fibers is present closer to the external perimeter than to the internal perimeter of the curved surface portion of the fiber reinforced plastic. The production method of such a fiber reinforced plastic of the present invention is not particularly limited. For example, such a fiber reinforced plastic can be obtained by the production method of the present invention comprising the laminating step, the forming step, and the solidifying step as explained above.

In the present invention, the curved surface portion refers to a site where the radius of curvature of the external diameter of the fiber reinforced plastic is 1 to 100 mm.

In the fiber reinforced plastic of the present invention, a plurality of the layers A can be present. In this case, the orientation direction of the reinforcing fibers in each layer A may be the same or different. In the portion excluding the layer(s) A, the orientation condition of the reinforcing fibers is not particularly limited, but the unidirectional orientation is preferable because the reinforcing fiber volume fraction can be increased and the mechanical properties in the orientation direction of the reinforcing fibers will be significantly ameliorated.

When a cross section that cuts through the fiber reinforced plastic of the present invention in the thickness direction is observed, the cross sections of the reinforcing fibers can take various shapes from a line shape to a circular shape when the reinforcing fibers are oriented randomly. On the other hand, when the reinforcing fibers are oriented unidirectionally, the reinforcing fibers have the same cross section. For example, in a cross section at right angle to the fiber direction, the cross section of the fibers is a circle. In a cross section oblique to the fiber direction, the cross section of the fibers is an ellipse. In the present invention, in the cross section that cuts through the fiber reinforced plastic in the thickness direction, a layer can be observed visually in the thickness direction. In this layer, when the coefficient of variation of longest diameters of the cross sections of the 100 reinforcing fibers selected randomly is 20% or less, the reinforcing fibers present in the layer are considered to be oriented unidirectionally. In a layer A of the fiber reinforced plastic of the present invention, resin portions P are present between fiber bundles adjacent to each other in the orientation direction of the reinforcing fibers (hereinafter, referred to as fiber direction). In the fiber reinforced plastic made of short fibers, when the resin portions P are present between the fiber bundles adjacent to each other in the fiber direction, the resin portions support a small load, and thus are likely to be a point of origin of a damage. Therefore, in order for the resin portions to transfer the load between the adjacent fiber bundles by a shear stress, a line segment interconnecting the end portions of the resin portions P is preferably disposed obliquely to the orientation direction of the reinforcing fibers. Furthermore, the length of all the reinforcing fibers is preferably within the range of 10 mm to 50 mm.

In order to improve the stiffness in the curved surface portion of the fiber reinforced plastic of the present invention, the fiber reinforced plastic of the present invention contains a layer A comprising the resin portions P at a site closer to the side of the external perimeter than to the side of the internal perimeter of the curved surface portion. Thus, the curved surface portion is also filled with the reinforcing fibers thoroughly.

When a load is applied to the fiber reinforced plastic, a high stress is likely to occur in the curved surface portion, which results easily in a damage. Therefore, it is preferable that the thickness of the layer A in the curved surface portion be thinner than the thickness of the layer A in the planar surface portion because the resin portions P also become thinner and the damage can be prevented.

The fiber reinforced plastic of the present invention may be molded from a prepreg laminate containing an incised prepreg which is/are formed by providing a prepreg in which the reinforcing fibers have been arranged in advance unidirectionally with incisions. A prepreg in which short fibers are arranged unidirectionally and impregnated with a resin may also be used.

In a further preferred mode of the fiber reinforced plastic of the present invention, in a given resin portion P in the plane of the layer A, when two parallel lines touching the outline of the resin portion P and having the shortest distance therebetween are drawn, the distance of the parallel lines has a mean value of 0.2 mm or less.

When the distance between the two parallel lines touching the outline of the resin portion P and having the shortest distance therebetween is considered as the width of the resin portion P, a smaller width of the resin portion P is preferable because the transfer of the load between the fibers adjacent to each other with the resin portion P sandwiched therebetween is carried out efficiently. The width of the resin portions P has preferably a mean value of 0.15 mm or less.

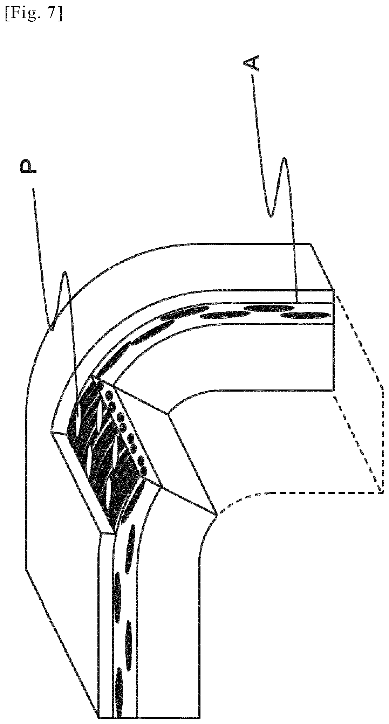

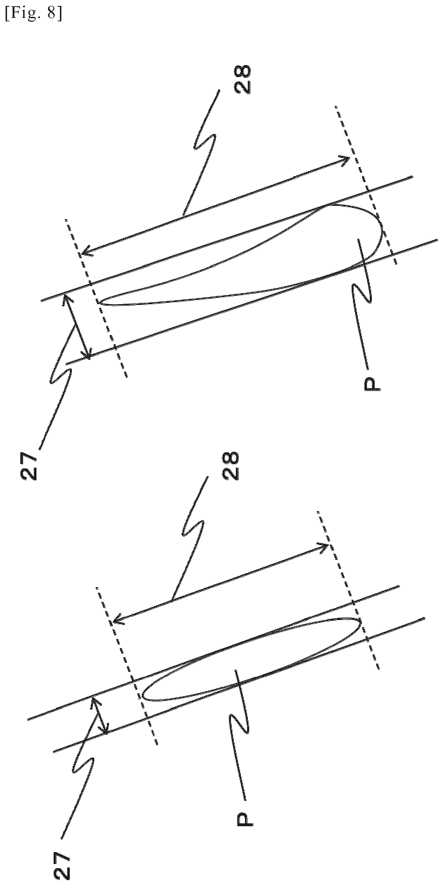

The mean value of the width of the resin portions P can be obtained by calculating the mean value of the width of 10 resin portions P selected from an image taken by an imaging device such as a digital microscope or the like of the surface of the layer A which has been carved out by a grinding machine or the like as shown in Fig. 7. The width of a resin portion P is, as shown in Fig. 8, the distance 27 between two parallel lines touching the outline of the resin portion P. The means to draw the two parallel lines may be done manually after the image is printed out, or a measuring means equipped with the digital microscope may be used.

In a further preferred mode of the fiber reinforced plastic of the present invention, the total volume of the resin portions P within the layer A is 5% or less of the volume of the layer A. The total volume of resin portions P is preferably 5% or less, and more preferably 3% or less of the total volume of the fiber reinforced plastic. In this preferable range, the surface quality of the fiber reinforced plastic does not worsen and does not cause a defect in a structure, either. The ratio of the volume of the resin portions P in the curved surface portion is preferably 0.1% or more of the volume of the layer A in the curved surface portion. This preferable range results in a lower possibility that a void or the like occurs because the resin fails to be filled between the reinforcing fibers adjacent to each other in the fiber direction, thereby preventing the decrease in mechanical properties.

The volume of a resin portion P in the layer A is, on the supposition that the resin portion P has the same shape in the thickness direction, calculated from the area of the resin portion P measured from the surface of the layer A. The area of one resin portion P is defined as a half of the product of the width of the resin portion P and the length of the resin portion P. The length of the resin portion P is, as shown in Fig. 8, the longest distance 28 of the two parallel lines touching the outline of the resin portion P. The layer A is observed for the region of the surface of 10 mm x 10 mm, and the total area ($mm^2$) of all the resin portions P present in the region is the volume ratio of the resin portions P (%) in the layer A.

EXAMPLES

Hereinafter, the present invention will be further concretely described with reference to examples. However, the present invention is not limited to the inventions described in the examples.

<Production of Prepreg Laminate>

A prepreg sheet of Torayca (registered trademark), P3052S-15 (reinforcing fiber: T700S, resin: 2500, and volume fraction of reinforcing fibers: 56%, and a mold release paper is laminated on a side surface) was pressed against a roller with rotary blades with the blades disposed in given sites to provide incisions penetrating the prepreg. The incised region was the entire prepreg, and all the reinforcing fibers were divided by the incisions. In any Example, when the resin in the incised prepreg of 200 mm x 200 mm was burned off at 400°C, it was confirmed that the reinforcing fibers of 200 mm did not remain and that all the reinforcing fibers were divided.

The groups of prepregs forming the prepreg laminate were all incised prepregs. In the laminating step, with a side and the other side perpendicular to the side of a square of 150 mm x 150 mm being 0° and 90°, respectively, lamination was performed so that the orientation direction of the reinforcing fibers of the incised prepreg would be $[+45°/0°/-45°/90°]_{2s}$. After the lamination, the layers of the groups of prepregs were tightly attached by vacuuming for 30 minutes to obtain a prepreg laminate of 150 mm x 150 mm.

<Evaluation of Distribution of Incisions>

Several photos of the surface of the incised prepreg were taken by a digital microscope at a magnification of 10x, and the photos were joined on a screen to display the incised prepreg surface of 50 mm x 50 mm on the screen. Using a measurement software, 10 circles of 10 mm in diameter were drawn so that the centers of three adjacent circles would form an equilateral triangle like the arrangement of bowling pins. The distance between the centers of the two adjacent circles was 12 mm. The number of incisions which were contained in each circle or touched each circle was counted as a population, and the mean value and the coefficient of variation of the population were calculated.

<Evaluation of Formability>

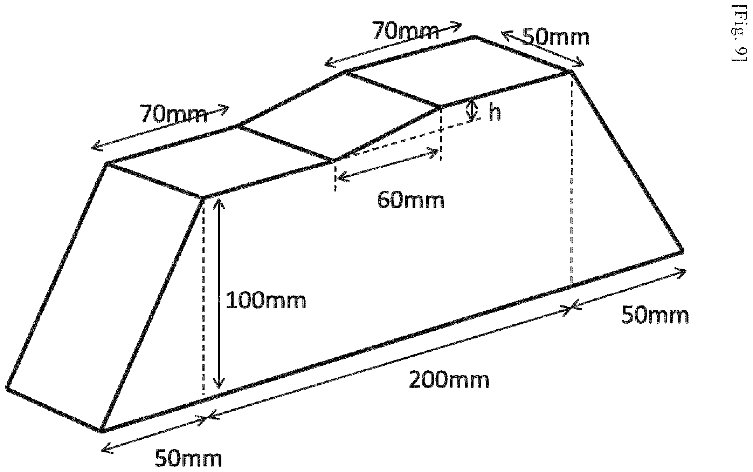

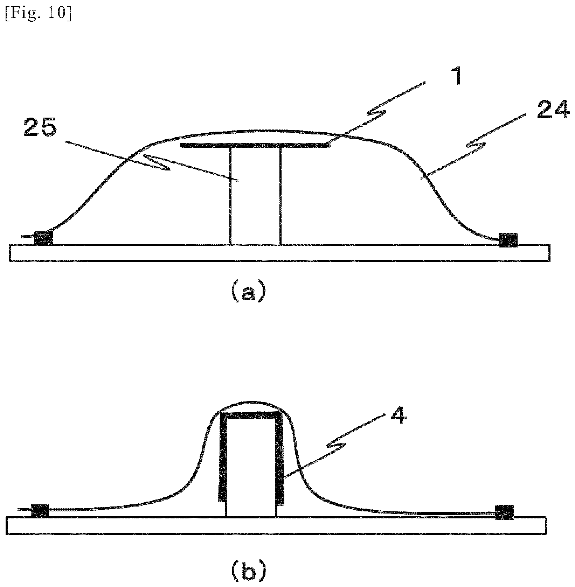

On the top surface of the mold of Fig. 9 containing a top surface and a side surface and having a shape of the C-shaped cross section which continues in the lengthwise direction, a prepreg laminate was disposed so that 0° of the prepreg laminate would be in the lengthwise direction. The prepreg laminate was bended and formed along the side surface to obtain a preform having an approximate shape of the mold. For the forming method, as shown in Fig. 10, the mold was placed on a plate, and the prepreg laminate was placed thereon. After the sealing with a bag film, the bag film was drawn to the mold by vacuuming, and at the same time, the prepreg laminate was bended and formed. When the out-of-plane deformation occurred, a shear stress was applied manually to press against the mold for the planarization. This forming step was carried out in an oven under the temperature control at 60°C. For the mold, a mold with the h in Fig. 9 being 2 mm and a mold with the h in Fig. 9 being 6 mm were prepared. The resulting preform was evaluated for the conformity to a three dimensional shape in the following three 3 grades.

A: The first bending and forming allowed the preform to conform to the shape.
B: After the first bending and forming, the out-of-plane deformation occurred. However, the pressing against the mold while applying a shear stress could planarize the out-of-plane deformation.
C: After the first bending and forming, the out-of-plane deformation occurred. Although the preform was pressed against the mold while a shear stress was applied, the out-of-plane deformation could not be planarized and remained.

<Surface Quality of Fiber Reinforced Plastic>

The above preform was removed from the mold and installed in a female mold different than the mold used for the bending and forming. The preform and the mold were covered with a bag film and hardened under vacuuming in an autoclave at 130°C for 1.5 hours. The surface of the produced fiber reinforced plastics was checked visually and divided into the following three grades. The undulation of the reinforcing fibers indicates a disturbed orientation of reinforcing fibers which occurs on the surface of the fiber reinforced plastic and worsens the surface quality.

A: The opening of incisions was hardly recognizable, and no undulation of the reinforcing fibers occurred.
B: The opening of incisions was recognizable, but no undulation of the reinforcing fibers occurred.
C: The undulation of the reinforcing fibers occurred.

<Evaluation of Orientation Condition of Reinforcing Fibers>

In the resulting fiber reinforced plastic, the site having a slope on the top surface of the mold in Fig. 9 was cut in center to a plane perpendicular to the lengthwise direction to obtain a rectangular cross section. The site corresponding to the top surface was cut out to a size of 10 mm x 10 mm. In the 8 layers located on the side closer to the external perimeter in the curved surface portion, the cross-sectional shape of the reinforcing fibers was observed. In each layer, the longest diameters of the cross sections of the 100 reinforcing fibers selected randomly were measured. When the coefficient of variation of the longest diameters was 20% or less, the reinforcing fibers present in the layer were considered to be oriented unidirectionally.

<Measurement of Width of Resin Portions P>

For the layers in which reinforcing fibers were considered as unidirectional in the evaluation of the orientation condition of reinforcing fibers, the surface of each layer was carved out in order from the external layer, using a grinding machine. In the layer in which resin portions P were observed, the widths of 10 resin portions P were measured to calculate the mean value.

<Measurement of Volume Ratio of Resin Portions P>

Along with the measurement of the width of the resin portions P, the lengths of the resin portions P were also measured. The sum of the products of the width x length x 1/2 for all the resin portions P contained in the image of the surface of the 10 mm x10 mm square was calculated and then divided by 100 mm$^2$ to calculate the ratio of the volume of the resin portions P contained in the layer A.

<Mechanical Properties>

Because it was difficult to compare the strength of a fiber reinforced plastic having a curved surface portion, a test piece in a tabular shape was prepared to perform a tensile test. The incised prepregs cut out to the size of 350 mm x350 mm were laminated at a lamination structure of $[+45°/0°/-45°/90°]_{2S}$, and hardened in an autoclave at 130°C for 1.5 hours.
After the molding of the plate, test pieces of 25 mm x 250 mm were cut out so that the 0-degree direction was in the lengthwise direction, and were subjected to a tensile test by a method stipulated in ASTM D3039 (2008). The numbers of test pieces measured were five for each level. Mean values of the tensile elastic modulus and the tensile strength were calculated as representative values.

(Example 1)

A prepreg laminate was formed from incised prepregs in which the incision pattern was as illustrated in Fig.

5(a), the divided reinforcing fiber length was 20 mm, the projected length Ws of the incisions projected to a plane perpendicular to the orientation direction of reinforcing fibers = 5 mm, and the angle θ formed between the incisions and the orientation direction of the reinforcing fibers was 45°.

In the evaluation of the distribution of the incisions, the mean value for the population was 1.6 and the coefficient of variation therefor was 32%.

In the evaluation of the formability, when h = 2 mm, the forming was performed without any problem. However, when h = 6 mm, the planarization could not be achieved and the out-of-plane deformation remained. As for the surface quality of the fiber reinforced plastic after being hardened, the opening of incisions was seen in the surface both in the case of h = 2 mm and in the case of h = 6 mm. The mechanical properties were very poor compared to the case without any incision.

The width of the resin portions P of the fiber reinforced plastic was 0.24 mm, and the volume of the resin portions P was 5.7%. The tensile strength was 490 MPa.

(Example 2)

A prepreg laminate was formed from incised prepregs in which the incision pattern was as illustrated in Fig. 5(a), the divided reinforcing fiber length was 20 mm, the projected length Ws of the incisions projected to a plane perpendicular to the orientation direction of reinforcing fibers = 0.2 mm, and the angle θ formed between the incisions and the orientation direction of reinforcing fibers was 14°. In the evaluation of the distribution of the incisions, the mean value for the population was 17.5 and the coefficient of variation therefor was 8%.

In the evaluation of the formability, when h = 2 mm, the forming was performed without any problem. However, when h = 6 mm, the planarization could not be achieved and the out-of-plane deformation remained. As for the surface quality of the fiber reinforced plastic, no opening of incisions was seen in the surface in the case of h = 2 mm. In the case of h = 6 mm, the opening of the incisions was seen but less visible than in Example 1.

While the width and the volume of the resin portions P of the fiber reinforced plastic were both smaller than in Example 1, the tensile strength was higher than in Example 1.

(Example 3)

A prepreg laminate was formed from the incised prepregs having the incision pattern illustrated in Fig. 5 (b). For the length of all the incisions, the length of divided reinforcing fibers was 20 mm, the projected length Ws of the incisions projected to a plane perpendicular to the orientation direction of reinforcing fibers was 0.2 mm, and the angle θ formed between the incisions and the orientation direction of reinforcing fibers was 20°. Furthermore, the positive incisions whose θ was positive and the negative incisions whose θ was negative were approximately equal in number, and the intervals between incisions present on an extended line of incisions were different for the positive incisions (2.8 mm) and the negative incisions (17 mm). In the evaluation of the distribution of the incisions, the mean value for the population was 15.1 and the coefficient of variation therefor was 6%. The incisions were distributed at a high density and homogeneously.

In the evaluation of the formability, when h = 2 mm, the forming was performed without any problem. When h = 6 mm, the out-of-plane deformation was observed, but could be planarized. After the hardening, a good quality was exhibited both in the case of h = 2 mm and in the case of 6 mm.

While the width and the volume of the resin portions P of the fiber reinforced plastic were both further smaller than in Example 2. The tensile strength further improved compared to Example 2.

(Example 4)

The same incised prepreg laminate as in Example 3 was used to form a flange portion in addition to the bending and forming in the forming step to prepare a preform with a flange as shown in Fig. 6 (b). The out-of-plane deformation remained at the end of the preform. The height was 1.8 times the thickness of the prepreg laminate. It was considered that the out-of-plane deformation could be reduced by applying a shear stress from outside the plane, but it would require efforts. Therefore, the preform was installed in a female mold that could apply pressure to the flange as well while the out-of-plane deformation was still present. Thus, a fiber reinforced plastic was produced like in Examples 1 to 3. As a result, the out-of-plane deformation present on the flange disappeared and a fiber reinforced plastic with a flat flange could be produced.

(Comparative Example 1)

A prepreg laminate was formed only from prepregs without any incision. Both in the case of h = 2 mm and in the case of 6 mm, the out-of-plane deformation occurred and the planarization could not be achieved. For the surface quality after the hardening, the undulation of the fibers was observed both in the case of h = 2 mm and in the case of 6 mm.

[Table 1]

| | Conformity to a three dimensional shape | | Surface quality of fiber reinforced plastic | | Average width of resin portion P [mm] | Volume ratio of resin portion P [%] | Tensile strength [MPa] |
|---|---|---|---|---|---|---|---|
| | h=2mm | h=6mm | h=2mm | h=6mm | | | |
| Example 1 | A | B | B | B | 0.24 | 5.7 | 490 |
| Example 2 | A | B | A | B | 0.16 | 3.8 | 610 |
| Example 3 | A | B | A | A | 0.13 | 2.5 | 660 |
| Comparative Example 1 | C | C | C | C | - | - | 750 |

INDUSTRIAL APPLICABILITY

The present invention can provide a production method for a fiber reinforced plastic, in which a wrinkle-free preform can be formed by hot forming and the resulting fiber reinforced plastic exhibits high mechanical properties, and can also provide a fiber reinforced plastic which shows high mechanical properties in spite of its complicated shape and thus can be used for structural applications such as in aircraft, spacecraft, motor vehicles, railways, ships, electric appliances, sports, etc.

EXPLANATION OF NUMERALS

1: Prepreg laminate
2: Top surface of the mold
3: Side surface of the mold
4: Preform
5: Lengthwise direction of the mold
6: Incised prepreg
7: Incision
8: Incised region
9: Small region
10: Width of the band between the incisions most proximate to each other
11: Distance between most proximate incisions
12: Positive incision
13: Negative incision
14: Straight line on which positive incisions exist
15: Straight line on which negative incisions exist
16: End surface of the prepreg laminate during the forming
17: Out-of-plane deformation
18: Shear stress
24: Bag film
25: Mold illustrated in Fig. 9
26: Flange portion
27: Width of the resin portion P
28: Length of the resin portion P

**Claims**

1.  A production method for a fiber reinforced plastic, comprising:
a laminating step of laminating a plurality of groups of prepregs containing an incised prepreg (6) to obtain a prepreg laminate (1), when the incised prepreg (6) is formed by providing at least a partial region (8) in a prepreg containing unidirectionally oriented reinforcing fibers and a resin with a plurality of incisions (7) that divide the reinforcing fibers, a forming step of disposing the prepreg laminate on the top surface of a mold containing the top surface (2) and a side surface (3) or disposing the prepreg laminate (1) on the bottom surface of a mold containing the bottom surface and a side surface (3), and bending and forming the prepreg laminate along the side surface (3) to obtain a preform (4) having an approximate shape of the mold, and

a solidifying step of disposing and solidifying the preform (4) in a mold different than the mold used in the forming step **characterized in that** when a population is made up of numbers of incisions (7) contained in ten small circular regions (9) of 10 mm in diameter arbitrarily selected in the region (8) of the incised prepreg (6), the incised prepreg (6) has a mean value for the population of 10 or greater and a coefficient of variation for the population within 20%, and absolute values of angles $\theta$ formed between the incisions (7) and an orientation direction of the reinforcing fibers are substantially the same, the positive incisions (12) whose $\theta$ is positive and the negative incisions (13) whose $\theta$ is negative are approximately equal in number, and, as an interval between a given incision (7) and another incision (7) that is present on an extended line of the incision (7) and that is most proximate to the incision (7), intervals between the positive incisions (12) and intervals between the negative incisions (13) are different in length from each other.

2. The production method for a fiber reinforced plastic according to claim 1, wherein the preform (4) contains at least one out-of-plane deformation (17), and the height of the out-of-plane deformation (17) is 0.5 times or more and 3 times or less the mean thickness of the prepreg laminate (1).

3. The production method for a fiber reinforced plastic according to claim 1or 2, wherein, in the forming step, at least a partial region of the preform (4) having an approximate shape of the mold is pressed against the mold for planarization while applying a shear stress.

**Patentansprüche**

1. Herstellungsverfahren für einen faserverstärkten Kunststoff, umfassend:

   einen Laminierungsschritt des Laminierens einer Vielzahl von Gruppen von Prepregs, die ein eingeschnittenes Prepreg (6) beinhalten, um ein Prepreg-Laminat (1) zu erhalten, wenn das eingeschnittene Prepreg (6) gebildet wird, indem zumindest ein Teilbereich (8) in einem Prepreg, das unidirektional ausgerichtete Verstärkungsfasern und ein Harz beinhaltet, mit einer Vielzahl von Einschnitten (7) versehen wird, die die Verstärkungsfasern unterteilen,
   einen Formungsschritt des Anordnens des Prepreg-Laminats auf der Oberseite einer Form, die die Oberseite (2) und eine Seitenfläche (3) beinhaltet, oder des Anordnens des Prepreg-Laminats (1) auf der Unterseite einer Form, die die Unterseite und eine Seitenfläche (3) beinhaltet, und des Biegens und Formens des Prepreg-Laminats entlang der Seitenfläche (3), um einen Vorformling (4) zu erhalten, die eine ungefähre Formgebung der Form aufweist, und
   einen Verfestigungsschritt des Anordnens und Verfestigens des Vorformlings (4) in einer Form, die sich von der in dem Formungsschritt verwendeten Form unterscheidet,
   **dadurch gekennzeichnet, dass**, wenn eine Population aus einer Anzahl von Einschnitten (7) gebildet wird, die in zehn kleinen kreisförmigen Bereichen (9) mit einem Durchmesser von 10 mm beinhaltet sind, die willkürlich in dem Bereich (8) des eingeschnittenen Prepregs (6) ausgewählt werden, das eingeschnittene Prepreg (6) einen Mittelwert für die Population von 10 oder größer und einen Variationskoeffizienten für die Population innerhalb von 20% aufweist, und
   Absolutwerte von Winkeln $\theta$, die zwischen den Einschnitten (7) und einer Orientierungsrichtung der Verstärkungsfasern gebildet sind, im Wesentlichen gleich sind, die positiven Einschnitte (12), deren $\theta$ positiv ist, und die negativen Einschnitte (13), deren $\theta$ negativ ist, zahlenmäßig ungefähr gleich sind, und, als ein Intervall zwischen einem gegebenen Einschnitt (7) und einem anderen Einschnitt (7), der auf einer verlängerten Linie des Einschnitts (7) vorhanden ist und der dem Einschnitt (7) am nächsten liegt, die Intervalle zwischen den positiven Einschnitten (12) und die Intervalle zwischen den negativen Einschnitten (13) unterschiedlich lang sind.

2. Herstellungsverfahren für einen faserverstärkten Kunststoff nach Anspruch 1, wobei der Vorformling (4) zumindest eine Verformung (17) außerhalb der Ebene beinhaltet und die Höhe der Verformung (17) außerhalb der Ebene das 0,5-fache oder mehr und das 3-fache oder weniger der mittleren Dicke des Prepreg-Laminats (1) beträgt.

3. Herstellungsverfahren für einen faserverstärkten Kunststoff nach Anspruch 1 oder 2, wobei im Formgebungsschritt zumindest ein Teilbereich des Vorformlings (4), der eine ungefähre Formgebung der Form aufweist, zur Planarisierung unter Aufbringung einer Scherspannung gegen die Form gedrückt wird.

**Revendications**

1. Procédé de fabrication de plastique renforcé par des fibres, comprenant les étapes suivantes :

   une étape de stratification consistant à stratifier une pluralité de groupes de préimprégnés contenant un préimprégné incisé (6) pour obtenir un stratifié de préimprégné (1), lorsque le préimprégné incisé (6) est formé par fourniture d'au moins une région partielle (8) dans un préimprégné contenant des fibres de renfort orientées unidirectionnellement et une résine avec une pluralité d'incisions (7) qui divisent les fibres de renfort,
   une étape de formage consistant à disposer le stratifié de préimprégné sur la surface supérieure d'un moule comprenant la surface supérieure (2) et une surface latérale (3), ou à disposer le stratifié de préimprégné (1) sur la surface inférieure d'un moule comprenant la surface inférieure et une surface latérale (3), et à plier et former le stratifié de préimprégné le long de la surface latérale (3) pour obtenir une préforme (4) ayant une forme approximative du moule, et
   une étape de solidification consistant à disposer et solidifier la préforme (4) dans un moule différent de celui utilisé dans l'étape de formage,
   **caractérisé en ce que,**
   lorsqu'une population est composée de nombres d'incisions (7) contenues dans dix petites régions circulaires (9) de 10 mm de diamètre choisies arbitrairement dans la région (8) du préimprégné incisé (6), le préimprégné incisé (6) a une valeur moyenne pour la population de 10 ou plus et un coefficient de variation pour la population dans la limite de 20 %, et
   des valeurs absolues d'angles θ formés entre les incisions (7) et une direction d'orientation des fibres de renfort sont sensiblement les mêmes, les incisions positives (12) dont l'angle θ est positif et les incisions négatives (13) dont l'angle θ est négatif sont approximativement égales en nombre, et, en tant qu'un intervalle entre une incision donnée (7) et une autre incision (7) qui est présente sur une ligne prolongée de l'incision (7) et qui est la plus proche de l'incision (7), les intervalles entre les incisions positives (12) et les intervalles entre les incisions négatives (13) sont différents en longueur les uns des autres.

2. Procédé de fabrication de plastique renforcé par des fibres selon la revendication 1, dans lequel la préforme (4) contient au moins une déformation hors plan (17), et la hauteur de la déformation hors plan (17) est égale à 0,5 fois ou plus et à 3 fois ou moins l'épaisseur moyenne du stratifié de préimprégné (1).

3. Procédé de fabrication de plastique renforcé par des fibres selon la revendication 1 ou 2, dans lequel, dans l'étape de formage, au moins une région partielle de la préforme (4) ayant une forme approximative du moule est pressée contre le moule pour la planarisation tout en appliquant une contrainte de cisaillement.

[Fig. 1]

[Fig. 2]

(a)

(b)

[Fig. 3]

[Fig. 4]

(a)

(b)

[Fig. 5]

EP 3 431 272 B1

[Fig. 6]

[Fig. 7]

[Fig. 8]

[Fig. 9]

[Fig. 10]

(a)

(b)

EP 3 431 272 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009052263 A
- WO 9606725 A
- EP 2127840 A
- JP 2008279753 A